# EUROPEAN PATENT SPECIFICATION

(11) **EP 3 219 564 B1**
(45) Date of publication and mention of the grant of the patent: **05.12.2018**
(21) Application number: 17160823.5
(22) Date of filing: 14.03.2017
(51) Int. Cl.: G06K 9/46, B60W 50/00, B60W 50/14, B60W 50/04, B60W 10/184, B60W 10/20, B60W 30/10, B60W 40/06, G05D 1/02, G06K 9/00, G06K 9/62, G01C 21/06, G01C 21/36, B60W 10/04, G01C 21/26

(54) **DRIVING PREDICTION WITH A DEEP NEURAL NETWORK**
FAHRVORHERSAGE MIT TIEFEM NEURONALEN NETZWERK
PRÉDICTION DE COMMANDE AU MOYEN D'UN RÉSEAU DE NEURONES PROFOND

(30) Priority: 14.03.2016 DE 102016204176
(43) Date of publication of application: 20.09.2017
(73) Proprietor: IMRA Europe S.A.S., 06904 Sophia Antipolis (FR)
(72) Inventor: TSISHKOU, Dzmitry, 06160 Juan Les Pins (FR); BENDAHAN, Rémy, 06160 Juan Les Pins (FR)
(74) Representative: Vigand, Philippe

(56) References cited:
- US-B1- 8 494 716
- Anonymous: "Autonomous Off-Road Vehicle Control Using End-to-End Learning", Net-Scale Technologies , 30 July 2004 (2004-07-30), pages 1-55, XP002772433, Retrieved from the Internet: URL:http://net-scale.com/doc/net-scale-dav e-report.pdf [retrieved on 2017-07-21]
- Dean A. Pomerleau: "Neural Network Perception for Mobile Robot Guidance", DTIC , 28 April 1992 (1992-04-28), pages 42-49, XP002772434, Retrieved from the Internet: URL:http://www.dtic.mil/dtic/tr/fulltext/u 2/a249972.pdf [retrieved on 2017-07-21]

## Description

The present invention relates to automated driving of vehicles. In particular, the present invention relates to a method of assisting a human driver during driving or a method of automatically driving a vehicle, based on analysis of past and present driving conditions to predict at least how the vehicle should be steered or how its speed should be adapted.

Documents JP2004268819 (A) and RU2013102888 (A) both describe a method of providing driving support or own vehicle path prediction. These documents propose to match current vehicle position (from GPS data) with navigation map in order to understand the radius of curvature of road ahead. They are comparing the current road structure and own vehicle driving speed. If the driving speed is too high for the current road then guidance (path change) or speed control is realized. However, these methods face the issue of low accuracy of navigation maps, especially when temporary obstacles (pedestrians, stopped vehicles...) are present on the followed road. Therefore, inappropriate suggestions might be given to the driver, leading to unnecessary modifications of vehicle speed or steering.

Documents GB2510167 (A), US2008088424 (A1), WO2006077182 (A1), and US2010318240 (A1) aim to provide solutions to the issues above mentioned, in particular by adding obstacle detection modules to the vehicle, or obstacle maps. This first adds complexity to the vehicle, requires more computational means, and still lacks accuracy, especially for small obstacles.

Document "Autonomous Off-Road Vehicle Control Using End-to-End Learning", Net-Scale Technologies, URL: http://net-scale.com/doc/net-scaledave-report.pdf, discloses a method according to the preamble of claim 1.

The present invention aims to address the above mentioned drawbacks of the prior art, and to propose first a method of assisting a human driver during driving or a method of automatically driving a vehicle, which is accurate, but does not add complexity to the vehicle nor require heavy computational resources.

The invention provides a method and a vehicle as defined by the independent claims. Preferred embodiments are defined by the dependent claims.

In other words, the method creates image files under a colour standard having three layers (RGB standard for example), with monochrome images taken at three different instants. This allows to submit large quantities of data including a time aspect, under a format generally accepted by the deep neural networks. It is to be noted as well that response of the deep neural network is enhanced, as a time dimension is added to the colour picture. More generally, the quantity of channels is not limited to three channels, and it might be encompassed to supply the images and time information through more than three channels, to further enhance the consideration of time. The channels are then layers of a single file, and each layer contains a picture at a given instant and its associated (optional) driving conditions.

The method according to the above embodiment provides an accurate prediction, as the deep neural networks are able to recognize rapidly from a digital file some fundamental aspects of the road conditions: road aspect (curves, slopes...), road boundaries (with trees, sidewalks...) and the presence of obstacles (pedestrians, vehicles stopped). The deep neural network, since it has been trained during the training phase, can easily after analysis of the digital file, recover the associated driving conditions decided by the human driver, in response to a similar situation to the one encountered.

Therefore, the predicted driving conditions suggested by the deep neural network to the driver or applied to control the vehicle will be similar to the ones decided by a human driver. The method provides the possibility to predict at least a steering angle and/or steering angle variation and/or a speed and/or an acceleration of the vehicle without any obstacle detection systems and without any navigation data received from a GPS.

A key of the method is to make the machine learning, such as a deep neural network, associating driving conditions decided by a human driver, with views of the road previously seen by the human driver during the learning phase. In other words, during the learning phase, the machine learning, such as a deep network links or assigns values of steering angle and/or steering angle variation and/or a vehicle speed and/or acceleration measured in real conditions with what the driver saw at least immediately before (the method might consider data collected up to 10 seconds or more before the prediction is made). Digital files of the followed path might be created with a digital camera pointing the road from the windscreen, but also with a laser light pointing the road and mapping the vehicle's environment, called LIDAR. It is also possible to record a 360° environment of the vehicle to supply data to the machine learning, such as a deep neural network.

It is to be noted that the vehicle acceleration might be positive (increase of speed) or negative (decrease of speed). Preferably, during the learning phase, the recorded driving conditions are steering angle and vehicle speed, and during the driving phase, the predicted driving conditions are steering angle variation and vehicle acceleration. This solution is the simplest one, to still get correct predicted values. To further enhance the method, during the driving phase, the driving conditions are also supplied to the deep neural network.

In particular, the method according to the present invention does not calculate any ideal trajectory, nor any mathematical position of the vehicle on the road. The machine learning, should be seen as a process that during the learning phase associates pictures with driving changes operated by a human, and does not calculate any mathematical trajectory or position. In other words, the machine learning creates a database where :
- pictures showing a right curve are associated with a given steering angle in clockwise direction and an optional speed decrease,
- pictures showing a left curve are associated with a given steering angle in counter clockwise direction and an optional speed decrease,
- pictures showing a cross road with stop sign are associated with speed decrease until stop,...

In summary, there is necessarily a learning phase before a prediction can be made during the driving phase, as it is required that the machine learning, during the initial learning phase, "auto"-constitutes a database with pictures seen from a driver's point of view, associated with car controls operated by a human driver.

Advantageously, during the learning phase, the data from the step of capturing and converting portions of a followed path are processed only if there is no accident, to supply to the deep neural network only data illustrating a safe journey.

Advantageously, the neural network is a convolutional neural network. Such network is well suited to analyse images or bi-dimensional objects or even multi dimensional objects.

Advantageously, during the learning phase and/or during the driving phase, the step of converting portions of a followed path seen at least from a driver's point of view into a series of digital files is a step consisting in taking a series of pictures. Deep neural networks are well suited to analyse bi dimensional objects such as pictures which are capturing the path seen from a driver's point of view.

Advantageously, the step of taking a series of pictures of the learning phase and/or of the driving phase comprises a step of:
- taking a video sequence of followed path with a minimum 120° Field of View camera having a minimum rate of 20 images per second,
- extracting the series of pictures from the taken video sequence. The method can be easily implemented with a standard dash cam having a 120 or e.g. 130° Field Of View. The video sequence might be taken with a camera having a minimum resolution of 640x480 pixels (VGA resolution). Advantageously, the resolution is 720p (1280x720 pixels) or higher. The minimum size of the pictures submitted to the deep neural network should be 256x256 pixels, with a compression quality of 90% maximum under the JPEG format.

Advantageously, the step of taking a series of pictures of the learning phase and/or of the driving phase comprises a step of:
- taking a video sequence of followed path with 360° Field of View. This embodiment may improve the response in specific cases where vehicle control has to be adapted in view of events taking place behind or on the sides of the vehicle (one can cite the fact that speed should be constant if another car overtakes the driven vehicle).

Advantageously, the step of recording the driving conditions of the learning phase and/or of the driving phase comprises a step of:
- assigning any value of recorded steering angle and/or recorded steering angle variation to a class chosen from at least 10 classes, and preferably to a class chosen from at least 20 classes,
   and/or,
- assigning any value of recorded vehicle speed and/or recorded vehicle acceleration to a class chosen from at least 10 classes, and preferably to a class chosen from at least 20 classes. In its preferred embodiment, 20 different classes for steering angle variation and 20 different classes for vehicle acceleration are used, which gives a 400 entries matrix to sort the pictures considered by the neural network. In other words, each image is associated with one of the 400 possible couples of steering angle and/or recorded steering angle variation and/or vehicle speed and/or acceleration. Consequently, the method can propose one couple of steering angle and/or recorded steering angle variation and vehicle speed and/or acceleration out of 400 possibilities for two parameters, which constitutes a very fine response.

Advantageously, the step of taking a series of pictures of the learning phase comprises a final step of:
- randomly extracting at least two images from each taken picture, to multiply the quantity of images at a given instant. This embodiment provides the possibility to increase the data supplied to the deep neural network, without recording too many journeys with a human driver.

Advantageously, at least 32 images are randomly extracted. This might be implemented if there are less than 10 journeys with a human driver available.

Advantageously, if during the learning phase, several journeys of the same path are performed by human drivers,
- the step of recording driving conditions includes a step of recording vehicle position,
- the step of linking to each picture the driving conditions recorded at the instant when said picture was taken includes a step of linking each picture with the vehicle position when said picture was taken. This step allows to recover, from several journeys along the same route, images of a same place.

Advantageously, if during the learning phase, several journeys of the same path are performed by human drivers,
- the step of recording driving conditions includes a step of recording vehicle position,
- the step of linking to each digital file the driving conditions recorded at the instant when said digital file was taken includes a step of linking each digital file with the vehicle position when said picture was taken.

Advantageously, during the driving phase and to predict at least a future steering angle and/or a steering angle variation and/or a future vehicle speed and/or a future vehicle acceleration, said deep neural network considers:
- the digital file with the linked driving conditions of present instant Ti, and
- the digital file with the linked driving conditions of instant Ti minus half a second, and
- the digital file with the linked driving conditions of instant Ti minus one second.

Advantageously, during the driving phase, said deep neural network predicts at least a future steering angle and/or a steering angle variation and/or a future vehicle speed and/or and/or a future vehicle acceleration at an instant Ti plus one second.

Advantageously, the method comprises a step of:
- calculating an instant when a future change of driving condition will be necessary, from said digital files supplied at a given instant,
- adjusting a value of a latest instant of prediction of said at least future steering angle and/or a future steering angle variation (da) and/or a future vehicle speed and/or future vehicle acceleration (dv), in consideration of the calculated instant where a change of driving conditions will be necessary. According to this embodiment, the prediction during the driving phase continuously estimates the latest instant when the results should be valid and reliable. Indeed, if the pictures taken show a travel along a straight motorway, it might be assessed that the prediction can be done reliably for the next ten seconds. In contrast, if the pictures reveal that the vehicle circulates along a tortuous track, it will be deducted that the prediction cannot be made beyond the next two seconds. Consequently, a frequency of refreshing the calculations and/or displaying the predictions and/or controlling the vehicle might be adapted from this step, thereby leading to an economy of calculation means, an improvement of user experience, an improvement of safety...

Advantageously, the step of calculating an instant when a future change of driving condition will be necessary comprises the step of considering geolocation data and/or considering vehicle path data. In other words, the method can take into account data or information available from GPS data, to take into account the next curves of the road. Alternatively or in addition, the method can take advantage of GPS guidance, if the user has entered a final destination. Consequently, the method will take into account only the calculated path to follow and will ignore the other alternative paths. Consequently, the method will for example not advise to decrease speed when approaching crossroads if no change of direction is planned on the calculated path.

Of course, the calculation of the instant of future change of driving condition can also take into account the vehicle speed which is easily available. However, a precise estimate of the vehicle speed can be made solely on the basis of the pictures taken.

The invention relates to a vehicle according to claim 12.

In other words, the invention relates to a vehicle driven according to the method of the first aspect of the invention.

One should note that the vehicle does not necessarily need to comprise a navigation system (GPS or the like), nor any obstacle detection systems (ultrasonic, infra red, lasers or the like) to allow an autonomous or assisted driving experience, as the machine learning (preferably a deep neural network and more preferably a convolutional neural network) basically only needs pictures at present instant and/or previous instant(s) to predict a steering angle or angle variation or vehicle speed or acceleration at a future (later) instant (from 0.5 seconds up to 10 seconds for example). The measuring unit is required during a learning phase of the first aspect of the invention, but is not required during a driving phase of the first aspect of the invention.

However, as seen above, a navigation system can be used to optimize the calculations for the predictions during the driving phase, by providing information not available on the taken pictures, for instance to adapt the maximum instant at which a reliable prediction can be made (different between a mountain curved track and a rectilinear highway track...), or to delete possible options from the calculations (to ignore a possible direction change at a cross road, since not directing to the desired destination).

As an example:
- the steering unit might be a manual steering unit with a steering wheel linked to the wheels by a steering column and steering rack, but it might comprise an hydraulic or electric assistance or motors for automatic control,
- the power unit, might be a thermal engine, an electric motor, or a combination thereof,
- the braking unit might comprise an assistance unit to assist the driver or to automatically brake the vehicle,
- the path capturing unit might be a 120° field of view camera, a 360° field of view camera, or a 360° scanning device, such as a laser light scanning unit (LIDAR),
- the optional measuring unit might be an electronic unit with accelerometers, and/or sensors to measure the steering angle, and/or the speed of the vehicle, and/or an optional geolocation unit (GPS) to provide precise map and position data,
- the prediction unit may be an electronic control unit presenting the following features:
   - a GPU having at least 192 CUDA cores
   - a Multicore processor such as quad core ARM Cortex-A1 5 CPU
   - 2 GB x16 Memory with 64-bit Width
   - 16 GB 4.51 eMMC Memory
   - the suitable necessary ports to enable communication with a communicating bus, the embarked camera or laser light scanning unit.... in particular, the prediction unit may be the NVIDIA Jetson TK1 developer kit, available from NVIDIA.

Other features and advantages of the present invention will appear more clearly from the following detailed description of particular non-limitative examples of the invention, illustrated by the appended drawings where:
- figure 1 represents a picture of a followed path taken at an instant Ti-2 from a vehicle's driver point of view;
- figure 2 represents a picture of the followed path of figure 1, taken at a later instant Ti-1 from a vehicle's driver point of view;
- figure 3 represents a picture of the followed path of figure 1, taken at a further later instant Ti from a vehicle's driver point of view;
- figure 4 represents recorded data during a journey during which pictures of figures 1-3 were taken;
- figure 5 represents an example of categorization of the recorded data of figure 4;
- figure 6 represents a vehicle equipped with the necessary units to implement the method according to the invention.

The method according to the present invention is a method to assist a driver to drive a vehicle, or a method to drive a vehicle. This method comprises a learning phase during which a deep neural network learns how a human driver controls a vehicle, based only on the road currently and/or previously seen by the driver. The key parameters to control a vehicle might be (among other) at least the steering angle (the angle of rotation applied to the steering wheel by the driver), and the acceleration (speed increase or speed decrease) imposed to the vehicle by the driver.

To gather the necessary data to supply to the deep neural network, the learning phase comprises a step of recording pictures during a journey where a vehicle is driven by a human driver. During same journey, key parameters of the controls are recorded as well: at least the steering angle variation and the vehicle acceleration.

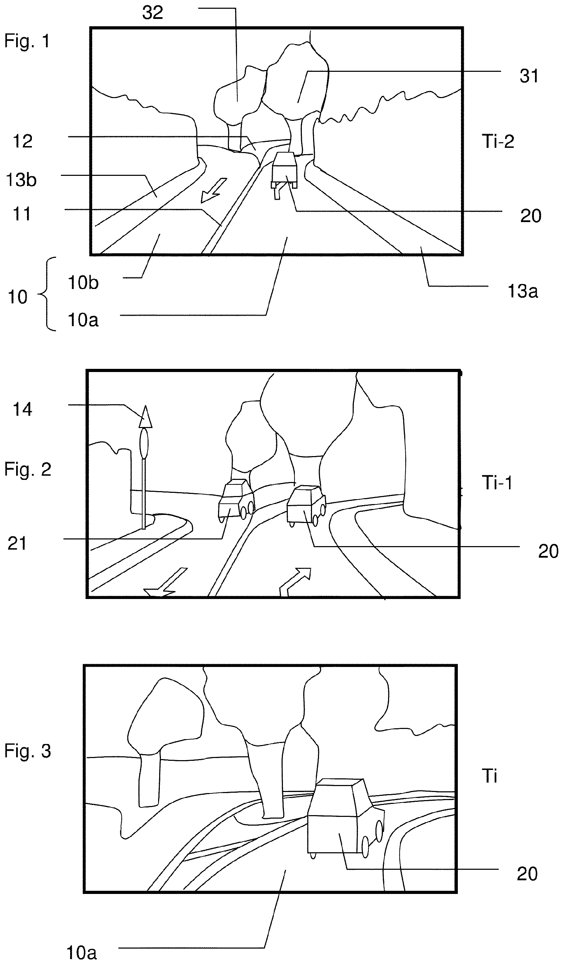

To collect pictures, it is possible for example to install a dash camera in the vehicle interior, pointing to the road ahead. The dash camera will record a video sequence from which it is easy to extract pictures, such as the ones represented figures 1-3. These pictures form a series of pictures of the followed path during the journey, taken at regular time intervals. Figure 1 represent the road seen by the driver at instant Ti-2, figure 2 represents the road seen by the driver at instant Ti-1, and figure 3 represents the road seen by the driver at instant Ti. In this example, a picture is taken each second, but since a standard video sequence comprises at least 20 frames per second, and up to 50 frames per second, it is possible to extract more pictures from the video sequence.

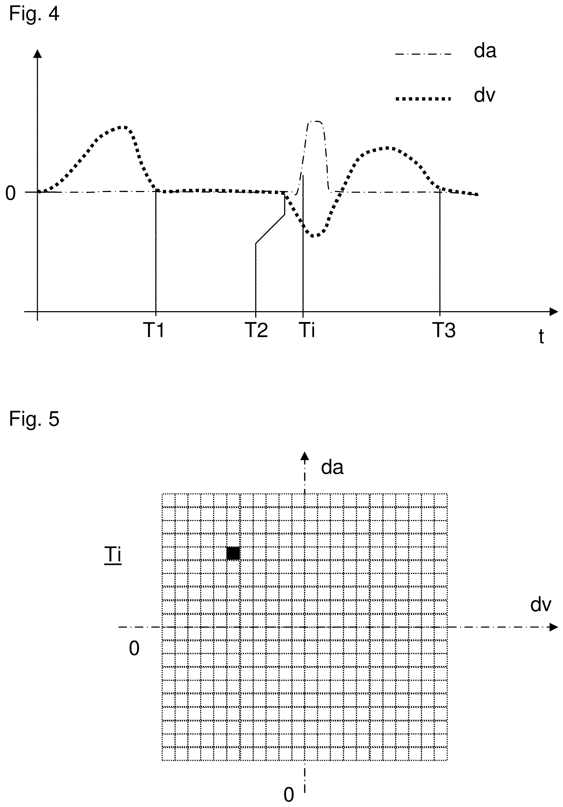

During the same journey, steering angle da and vehicle acceleration dv are also recorded as driving conditions, and figure 4 illustrates a typical graph showing these driving conditions. Positives values for da represent steering the vehicle to the right, and negative values represent steering the vehicle to the left. In summary, the vehicle accelerated until reaching a constant speed at T1, and decelerated at T2, as the drivers turned to the right at Ti, and then reaccelerated until T3.

Even though it is not required to process the method according to the present invention, it is possible to record the position of the vehicle through a GPS system. It is then possible to link each image to the position of the vehicle to easily recover and compare images from the same place, if several journeys with real human drivers had some path in common.

With such data, it is possible to link each picture of the series of pictures during the journey with the driving conditions da, dv measured at the instant when the picture was taken. As an example, figure 4 shows the instant Ti, with associated values of da, dv, which corresponds to the situation represented figure 3, at same instant Ti: the vehicle slows down and turns right as it enters a curve to the right, while following a vehicle 20.

In summary, each picture is associated with the driving conditions of the vehicle driven by a human driver measured at the instant when said picture was taken.

All these data are supplied to a deep neural network, which can be a convolutional neural network, and more particularly, this convolutional neural network might be Inception V3, presented by Christian Szegedy, Vincent Vanhoucke, Sergey loffe, Jonathon Shlens, and Zbigniew Wojna at the following address: http://arxiv.org/pdf/1512.00567v3.pdf.

Tutorial of such deep neural network, Inception V3 can be accessed at https://www.tensorflow.org/versions/r0.7/tutorials/image recognition/index.ht ml

The deep neural network Inception V3 can be downloaded at: https://storage.googleapis.com/download.tensorflow.ora/models/inception dec 2015.zip

Another deep neural network, such as AlexNet, can be accessed at the following address: http://caffe.berkeleyvision.org/model zoo.html

Such deep neural network are well suited to analyse images such as the ones presented in figures 1-3, where the deep neural network will recognize the shapes of a road 10 having a right lane 10a, a left lane 10b separated by a continuous line 11. Sidewalks 13a, 13b, trees 31, 32, signs 14, followed vehicle 20, vehicle 21 driving along the left lane 10b and secondary road 12 will be as well recognized. In other words, the deep neural network will recognize from each picture the objects constituting a road, a slope, curves, obstacles, signs...

The deep neural network can efficiently analyse the pictures of figures 1-3 provided they present a minimum size of 256x256 pixels and a maximum compression quality of 90%. To generate more data, it is possible to perform random crops from the same picture and to provide these crops linked to the driving conditions recorded at the instant when the initial picture was taken. For example, it is possible to perform 32 random crops from the same picture.

To supply the data to the deep neural network, it is possible to convert all the pictures into monochrome pictures, and to generate standard colour images having three layers or colour channels with writing in each channel a monochrome image. It is advantageous to write pictures taken at successive instants into the channels, to create a time dimension in this standard colour image (having its colour channels being successive pictures of the journey).

All in all, the deep neural network is supplied with pictures of the road seen by the human driver, with the driving conditions decided by the human driver at the time when each picture is taken. This allows the deep neural network to associate the conditions of a picture (taken at instant Ti-1 for example) with the driving conditions (steering angle and vehicle acceleration da, dv) at later instant Ti. In other words, the deep neural network learns the steering angle variation and vehicle acceleration chosen by a human driver at instant Ti, after having seen the road conditions at earlier instant Ti-1 and/or instant Ti-2 and or even earlier instants.

In detail, as figure 2 represents at instant Ti-1 a right lane 10a having a curve and a vehicle 20, the human driver has decelerated and initiated to turn rightwards the steering wheel at instant Ti, as shown figure 4. The deep neural network will learn this key information.

Figure 5 represents an example of data computation for the driving conditions da, dv. The present invention proposes to categorize these data into different classes, to enhance the processing. It is proposed to sort the steering angle variation da and the vehicle acceleration dv into 20 classes for each parameter, which gives a 400 entries matrix represented figure 5. As an example, the couple da, dv measured at instant Ti is represented in the black box. It is immediately apparent that such categorization gives a very precise sorting of driving conditions. It is possible to add to the recorded parameters the exact value of the steering angle, and the value of the speed, to enrich the data and to propose a more accurate response.

It is to be noted that the number of classes for each parameter might be different, and that the axes might be offset (especially the acceleration axis da, as braking usually provides higher absolute acceleration values than a motor does).

Once the deep neural network has finished the learning phase, it is possible to run the method through a driving phase. During this phase, pictures are taken while the vehicle is driven. Let now assume that figures 1 and 2 are pictures taken during a driving phase. These pictures are supplied to the deep neural network with the task to predict what should be the next driving condition to be applied to the vehicle.

The deep neural network recognizes from figures 1 and 2 the road 10, the right lane 10a, the left lane 10b, the continuous line 11, the followed vehicle 20, and the road environment (trees 31, 32, sidewalks 13a, 13b).

Consequently, the deep neural network, from its learning phase, deducts that a human driver would have turned right and decelerated a bit in similar condition, and the deep neural network even recovers the values da, dv decided by the human driver, from the matrix represented figure 5. It is then possible to display these values da, dv to the driver, or to control the steering wheel and engine of the vehicle accordingly.

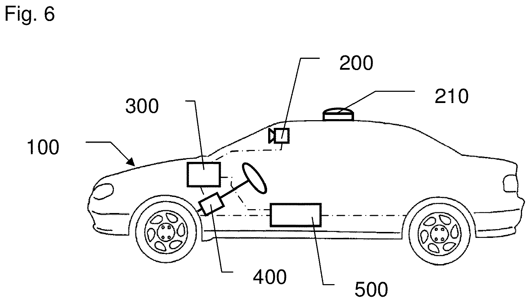

Figure 6 represents a vehicle 100 equipped with a camera 200 pointing the road ahead to take a video or a continuous series of pictures during a journey, as the ones shown figures 1-3.

The vehicle 100 also comprises an electronic control unit 300 with:
- an image treatment unit arranged to format the video of the pictures in a series of pictures taken at different instants into files accepted by a deep neural network,
- a prediction unit arranged to host a deep neural network:
   - which has been trained to associate driving conditions at a given instant with at least one picture of followed path taken at an earlier instant and
   - to which the pictures formatted by the image treatment unit are supplied,
   - which in response outputs a prediction of driving conditions to be applied to the vehicle 100 (such as a steering angle and/or a steering angle variation (da) and/or a vehicle speed and/or a vehicle acceleration (dv))
- a control unit arranged to display the predicted driving conditions for a driver, and/or to control the vehicle 100 with the predicted driving conditions.

As an alternative or in addition to the camera 200, the vehicle 100 may comprise a 360° scanning unit 210, such as a 360° field of view camera, or a laser light scanning unit (LIDAR) for example.

The electronic control unit 300 is connected with:
- a steering unit 400 arranged to steer the vehicle, and
- a movement control unit 500 comprising a power unit, arranged to maintain or increase a vehicle speed and a braking unit arranged to stop the vehicle or to decrease the vehicle speed, and
- the camera 200,
so that vehicle 100 might be driven with the method according to the present invention. Of course, the steering unit 400 may comprise sensors to measure a steering angle or steering angle variation, and the vehicle 100 or the movement control unit 500 may comprise accelerometers / speed sensors to measure the acceleration/speed of the vehicle 100.

It is of course understood that obvious improvements and/or modifications for one skilled in the art may be implemented, still being under the scope of the invention as it is defined by the appended claims.

## Claims

1. Method for assisting a driver to drive a vehicle (100) or for driving a vehicle (100), the method comprising a learning phase and a driving phase,
the learning phase comprising the steps of:
- capturing and converting portions of a followed path seen at least from a driver's point of view into a series of digital files, during at least one journey where a vehicle (100) is driven by a human driver,
- recording during said at least one journey driving conditions (da, dv) including at least a steering angle and/or a steering angle variation (da) and/or a vehicle speed and/or a vehicle acceleration (dv),
- for each digital file taken in the series of digital files, linking to said digital file the driving conditions (da, dv) recorded at the instant when said digital file was captured,
- supplying to a machine learning, such as a deep neural network said digital file and the linked driving conditions (da, dv), to associate:
- digital file and/or driving conditions (da, dv) at a given instant Ti and/or at a prior instant,
with
- driving conditions (da, dv) at a later instant than said given instant Ti, the driving phase comprising the steps of:
- capturing and converting portions of a followed path seen at least from a driver's point of view into a series of digital files while a vehicle (100) is driven,
- optionally recording and linking to each digital file driving conditions (da, dv) including at least a steering angle and/or a steering angle variation (da) and/or a vehicle speed and/or a vehicle acceleration (dv) at the instant when said digital file is captured,
- supplying to said machine learning, such as a deep neural network said digital files with the optionally recorded and linked driving conditions (da, dv) to predict at least a future steering angle and/or a future steering angle variation (da) and/or a future vehicle speed and/or future vehicle acceleration (dv),
- displaying to a driver's attention said predicted future steering angle and/or predicted future steering angle variation (da) and/or predicted future vehicle speed and/or predicted future vehicle acceleration (dv), and/or
- controlling said driven vehicle (100) with said future predicted steering angle and/or predicted future steering angle variation (da) and/or predicted future vehicle speed and/or predicted future vehicle acceleration (dv),
wherein, during the learning phase and/or during the driving phase, the step of converting portions of a followed path seen at least from a driver's point of view into a series of digital files is a step consisting in taking a series of pictures,
**characterized in that** the step of supplying to the deep neural network said pictures and the linked driving conditions (da, dv) of the learning phase and/or of the driving phase comprises the initial steps of:
- converting each picture into a monochrome image,
(i) copying a monochrome image taken at an instant T(i-2) and its linked driving conditions (da, dv) into a first colour channel of a colour image,
(ii) copying a monochrome image taken at a later instant T(i-1) and its linked driving conditions (da, dv) into a second colour channel of a colour image,
(iii) copying a monochrome image taken at a further later instant T(i) and its linked driving conditions (da, dv) into a third colour channel of a colour image,
- performing steps (i) to (iii) until all the monochrome pictures of the journey are copied into a series of colour images.

2. Method according to the preceding claim, wherein the step of taking a series of pictures of the learning phase and/or of the driving phase comprises a step of:
- taking a video sequence of followed path having a minimum 120° Field of View camera with a minimum rate of 20 images per second,
- extracting the series of pictures from the taken video sequence.

3. Method according to any one of the preceding claims, wherein the step of recording the driving conditions (da, dv) of the learning phase and/or of the driving phase comprises a step of:
- assigning any value of recorded steering angle and/or recorded steering angle variation (da) to a class chosen from at least 10 classes, and preferably to a class chosen from at least 20 classes,
and/or,
- assigning any value of recorded vehicle speed and/or recorded vehicle acceleration (dv) to a class chosen from at least 10 classes, and preferably to a class chosen from at least 20 classes.

4. Method according to any one of claims 1 to 3, wherein the step of taking a series of pictures of the learning phase comprises a final step of:
- randomly extracting at least two images from each taken picture, to multiply the quantity of images at a given instant.

5. Method according to the preceding claim, wherein at least 32 images are randomly extracted.

6. Method according to any one of the preceding claims, wherein instant T(i-2) is instant Ti minus one second, and/or instant T(i-1) is instant Ti minus half a second.

7. Method according to any one of the preceding claims, wherein, if during the learning phase, several journeys of the same path are performed by human drivers,
- the step of recording driving conditions (da, dv) includes a step of recording vehicle position,
- the step of linking to each digital file the driving conditions (da, dv) recorded at the instant when said digital file was taken includes a step of linking each digital file with the vehicle position when said picture was taken.

8. Method according to any one of the preceding claims, wherein during the driving phase and to predict at least a future steering angle and/or a steering angle variation (da) and/or a future vehicle speed and/or a vehicle acceleration (dv), said deep neural network considers:
- the digital file with the linked driving conditions (da, dv) of present instant Ti, and
- the digital file with the linked driving conditions (da, dv) of instant Ti minus half a second, and
- the digital file with the linked driving conditions (da, dv) of instant Ti minus one second.

9. Method according to any one of the preceding claims, wherein during the driving phase, said deep neural network predicts at least a future steering angle and/or a steering angle variation (da) and/or a future vehicle speed and/or a vehicle acceleration (dv) at an instant Ti plus one second.

10. Method according to any one of claims 1 to 8, wherein during the driving phase, the method comprises a step of:
- calculating an instant when a future change of driving condition will be necessary, from said digital files supplied at a given instant,
- adjusting a value of a latest instant of prediction of said at least future steering angle and/or a future steering angle variation (da) and/or a future vehicle speed and/or future vehicle acceleration (dv), in consideration of the calculated instant where a change of driving conditions will be necessary.

11. Method according to the preceding claim, wherein the step of calculating an instant when a future change of driving condition will be necessary comprises the step of considering geolocation data and/or considering vehicle path data.

12. Vehicle (100) comprising:
- a steering unit (400), arranged to steer the vehicle (100) when a steering angle is applied to the steering unit (400),
- a power unit, arranged to maintain or increase a vehicle speed,
- a braking unit arranged to stop the vehicle (100) or to decrease the vehicle speed
- a path capturing unit (200, 210), arranged to capture and convert portions of a followed path seen at least from a driver's point of view into a series of digital files, when the vehicle (100) is driven,
- an optional measuring unit, arranged to record and link to each digital file driving conditions (da, dv) including at least a steering angle and/or a steering angle variation (da) and/or a vehicle speed and/or a vehicle acceleration (dv) measured at the instant when said digital file is captured
- a prediction unit, hosting a learning machine such as a deep neural network,
wherein the path capturing unit (200, 210) is arranged to supply to said machine learning, such as a deep neural network, said digital files with the optionally recorded and linked driving conditions (da, dv), and
wherein said machine learning, such as a deep neural network, is arranged to predict at least a future steering angle and/or a future steering angle variation (da) and/or a future vehicle speed and/or future vehicle acceleration (dv) based on a digital file captured at least at a present or prior instant, and wherein the vehicle (100) comprises a display unit arranged to display the predicted future steering angle and/or future steering angle variation (da) and/or future vehicle speed and/or future vehicle acceleration (dv), or wherein the vehicle (100) comprises an autonomous driving unit, arranged to control the steering unit (400) and/or the power unit and/or the braking unit with the predicted future steering angle and/or future steering angle variation (da) and/or future vehicle speed and/or future vehicle acceleration (dv), wherein, the path capturing unit (200, 210) is arranged to take a series of pictures,
**characterized in that** the path capturing unit (200, 210) is arranged for:
- converting each picture into a monochrome image,
(i) copying a monochrome image taken at an instant T(i-2) and its linked driving conditions (da, dv) into a first colour channel of a colour image,
(ii) copying a monochrome image taken at a later instant T(i-1) and its linked driving conditions (da, dv) into a second colour channel of a colour image,
(iii) copying a monochrome image taken at a further later instant T(i) and its linked driving conditions (da, dv) into a third colour channel of a colour image,
- performing steps (i) to (iii) until all the monochrome pictures of the journey are copied into a series of colour images.

## Patentansprüche

1. Verfahren zum Unterstützen eines Fahrers beim Fahren eines Fahrzeugs (100) oder zum Fahren eines Fahrzeugs (100), wobei das Verfahren eine Lernphase und eine Fahrphase umfasst,
wobei die Lernphase folgende Schritte umfasst:
- Erfassen und Umwandeln von Abschnitten eines gefolgten Pfads, mindestens gesehen von einem Gesichtspunkt eines Fahrers aus, in eine Serie von digitalen Dateien, während mindestens einer Reise, wo ein Fahrzeug (100) von einem menschlichen Fahrer gefahren wird,
- Aufzeichnen während der mindestens einen Reise von Fahrbedingungen (da, dv) einschließlich mindestens eines Lenkwinkels und/oder einer Lenkwinkeländerung (da) und/oder einer Fahrzeuggeschwindigkeit und/oder Fahrzeugbeschleunigung (dv),
- für jede digitale Datei, die in der Serie von digitalen Dateien aufgenommen wird, Verknüpfen der Fahrbedingungen (da, dv) mit der digitalen Datei zu dem Zeitpunkt, zu dem die digitale Datei erfasst worden ist,
- Zuführen zu einem Maschinellen Lernen, wie einem tiefen neuronalen Netzwerk, der digitalen Datei und der verknüpften Fahrbedingungen (da, dv), um zuzuordnen:
- einer digitale Datei und/oder Fahrbedingungen (da, dv) zu einem gegebenen momentanen Zeitpunkt Ti und/oder einem vorhergehenden Zeitpunkt
zu
- Fahrbedingungen (da, dv) zu einem späteren Zeitpunkt als dem gegebenen momentanen Zeitpunkt Ti,
wobei die Fahrphase die folgenden Schritte umfasst:
- Erfassen und Umwandeln von Abschnitten eines gefolgten Pfads, mindestens gesehen von einem Gesichtspunkt eines Fahrers aus, in eine Serie von digitalen Dateien, während ein Fahrzeug (100) gefahren wird,
- fakultativ Aufnehmen von Fahrbedingungen (da, dv) einschließlich mindestens eines Lenkwinkels und/oder einer Lenkwinkeländerung (da) und/oder einer Fahrzeuggeschwindigkeit und/oder einer Fahrzeugbeschleunigung (dv) zu dem Zeitpunkt, und Verknüpfen mit jeder digitalen Datei, wenn die digitale Datei erfasst wird,
- Zuführen zum Maschinellen Lernen, wie einem tiefen neuronalen Netzwerk, der digitalen Dateien mit den fakultativ erfassten und verknüpften Fahrbedingungen (da, dv), zum Vorhersagen von mindestens einem zukünftigen Lenkwinkel und/oder einer zukünftigen Lenkwinkeländerung (da) und/oder einer zukünftigen Fahrzeuggeschwindigkeit und/oder einer zukünftigen Fahrzeugbeschleunigung (dv),
- Anzeigen zur Beachtung durch den Fahrer des vorhergesagten zukünftigen Lenkwinkels und/oder des vorhergesagten zukünftigen Lenkwinkels und/oder der vorhergesagten zukünftigen Lenkwinkeländerung (da) und/oder der vorhergesagten zukünftigen Fahrzeuggeschwindigkeit und/oder der vorhergesagten zukünftigen Fahrzeugbeschleunigung (dv), und/oder
- Steuern des angetriebenen Fahrzeugs (100) mit dem zukünftigen vorhergesagten Lenkwinkel und/oder der vorhergesagten zukünftigen Lenkwinkeländerung (da) und/oder der vorhergesagten zukünftigen Fahrzeuggeschwindigkeit und/oder der vorhergesagten zukünftigen Fahrzeugbeschleunigung (dv),
wobei, während der Lernphase und/oder während der Fahrphase, der Schritt des Umwandelns von Abschnitten eines gefolgten Pfads, mindestens gesehen von einem Gesichtspunkt eines Fahrers aus, in eine Serie von digitalen Dateien, ein Schritt ist, der aus Aufnehmen einer Serie von Bildern besteht,
**dadurch gekennzeichnet, dass** der Schritt des Zuführens zum tiefen neuronalen Netzwerk der Bilder und der verknüpften Fahrbedingungen (da, dv) der Lernphase und/oder der Fahrphase die Anfangsschritte umfasst von:
- Umwandeln jedes Bildes in ein monochromes Bild,
(i) Kopieren eines zu einem Zeitpunkt T(i-2) aufgenommenen monochromen Bildes und seiner verknüpften Fahrbedingungen (da, dv) in einen ersten Farbkanal eines Farbbildes,
(ii) Kopieren eines monochromen Bildes, das zu einem späteren Zeitpunkt T(i-1) aufgenommen worden ist, und dessen verknüpften Fahrbedingungen (da, dv) in einen zweiten Farbkanal eines Farbbildes,
(iii) Kopieren eines monochromen Bildes, das zu einem noch späteren Zeitpunkt T(i) aufgenommen worden ist, und dessen verknüpften Fahrbedingungen (da, dv) in einen dritten Farbkanal eines Farbbildes,
- Durchführen der Schritte (i) bis (iii), bis alle monochromen Bilder der Reise in eine Serie von Farbbildern kopiert sind.

2. Verfahren nach dem vorhergehenden Anspruch, wobei der Schritt des Aufnehmens einer Serie von Bildern der Lernphase und/oder der Fahrphase einen folgenden Schritt umfasst:
- Aufnehmen einer Videosequenz des gefolgten Pfades mit einer Kamera mit mindestens 120° Sichtfeld mit einer Mindest-Bildrate von 20 Bildern pro Sekunde,
- Extrahieren der Serie von Bildern aus der aufgenommenen Videosequenz.

3. Verfahren nach einem der vorhergehenden Ansprüche, wobei der Schritt des Aufzeichnens der Fahrbedingungen (da, dv) der Lernphase und/oder der Fahrphase einen folgenden Schritt umfasst:
- Zuordnen eines beliebigen Werts des aufgezeichneten Lenkwinkels und/oder der aufgezeichneten Lenkwinkeländerung (da) zu einer Klasse, die aus mindestens 10 Klassen ausgewählt ist, und vorzugsweise in eine Klasse, die aus mindestens 20 Klassen ausgewählt ist,
und/oder
- Zuordnen eines beliebigen Werts der aufgezeichneten Fahrzeuggeschwindigkeit und/oder der aufgezeichneten Fahrzeugbeschleunigung zu einer Klasse, die aus mindestens 10 Klassen ausgewählt ist, und vorzugsweise in eine Klasse, die aus mindestens 20 Klassen ausgewählt ist.

4. Verfahren nach einem der Ansprüche 1 bis 3, wobei der Schritt des Aufnehmens einer Serie von Bildern der Lernphase einen folgenden abschließenden Schritt umfasst:
- zufälliges Extrahieren von mindestens zwei Bildern von jedem aufgenommenen Bild, um die Anzahl von Bildern zu einem gegebenen Zeitpunkt zu multiplizieren.

5. Verfahren nach dem vorhergehenden Anspruch, wobei mindestens 32 Bilder zufällig extrahiert werden.

6. Verfahren nach einem der vorhergehenden Ansprüche, wobei der Zeitpunkt T(i-2) der Zeitpunkt Ti minus eine Sekunde ist, und/oder wobei der Zeitpunkt T(i-1) der Zeitpunkt Ti minus eine halbe Sekunde ist.

7. Verfahren nach einem der vorhergehenden Ansprüche, wobei, wenn während der Lernphase mehrere Reisen des gleichen Wegs von menschlichen Fahrern durchgeführt werden,
- der Schritt des Aufzeichnens von Fahrbedingungen (da, dv) einen Schritt des Aufzeichnens der Fahrzeugposition umfasst,
- der Schritt des Verknüpfens mit jeder digitalen Datei der Fahrbedingungen (da, dv), die zum Zeitpunkt des Aufzeichnens der digitalen Datei aufgezeichnet worden sind, einen Schritt des Verknüpfens jeder digitalen Datei mit der Fahrzeugposition, als das Bild aufgenommen wurde, umfasst.

8. Verfahren nach einem der vorhergehenden Ansprüche, wobei während der Fahrphase und zur Vorhersage mindestens eines zukünftigen Lenkwinkels und/oder einer Lenkwinkeländerung (da) und/oder einer zukünftigen Fahrzeuggeschwindigkeit und/oder einer Fahrzeugbeschleunigung (dv) das tiefe neuronale Netzwerk berücksichtigt:
- die digitale Datei mit den verknüpften Fahrbedingungen (da, dv) des momentanen Zeitpunkts Ti, und
- die digitale Datei mit den verknüpften Fahrbedingungen (da, dv) des momentanen Zeitpunkts Ti minus einer halben Sekunde, und
- die digitale Datei mit den verknüpften Fahrbedingungen (da, dv) des momentanen Zeitpunkts Ti minus einer Sekunde.

9. Verfahren nach einem der vorhergehenden Ansprüche, wobei während der Fahrphase das tiefe neuronale Netzwerk mindestens einen zukünftigen Lenkwinkel und/oder eine Lenkwinkeländerung (da) und/oder eine zukünftige Fahrzeuggeschwindigkeit und/oder eine Fahrzeugbeschleunigung (dv) zu einem Zeitpunkt Ti plus eine Sekunde vorhersagt.

10. Verfahren nach einem der Ansprüche 1 bis 8, wobei das Verfahren während der Fahrphase folgenden Schritt umfasst:
- Berechnen, anhand der digitalen Dateien, die zu einem gegebenen Zeitpunkt geliefert werden, eines Zeitpunkts, zu dem eine zukünftige Änderung der Fahrbedingungen erforderlich sein wird,
- Einstellen eines Werts eines letzten Vorhersagezeitpunkts für mindestens den zukünftigen Lenkwinkel und/oder eine zukünftige Lenkwinkeländerung (da) und/oder eine zukünftige Fahrzeuggeschwindigkeit und/oder zukünftige Fahrzeugbeschleunigung (dv) unter Berücksichtigung des berechneten Zeitpunkts, zu dem eine Änderung der Fahrbedingungen erforderlich sein wird.

11. Verfahren nach dem vorhergehenden Anspruch, wobei der Schritt des Berechnens eines Zeitpunkts, zu dem eine zukünftige Änderung des Fahrzustands erforderlich sein wird, den Schritt umfasst, Geopositionsdaten zu berücksichtigen und/oder Fahrzeugwegdaten zu berücksichtigen.

12. Fahrzeug (100), umfassend:
- eine Lenkeinheit (400), angeordnet, um das Fahrzeug (100) zu lenken, wenn ein Lenkwinkel an die Lenkeinheit (400) angelegt wird,
- eine Antriebseinheit, angeordnet, um eine Fahrzeuggeschwindigkeit beizubehalten oder zu erhöhen,
- eine Bremseinheit, angeordnet, um das Fahrzeug (100) anzuhalten oder die Fahrzeuggeschwindigkeit abzusenken,
- eine Pfaderfassungseinheit (200, 210), angeordnet zum Erfassen und Umwandeln von Abschnitten eines gefolgten Pfads, mindestens gesehen von einem Gesichtspunkt eines Fahrers aus, in eine Serie von digitalen Dateien, wenn das Fahrzeug (100) gefahren wird,
- eine optionale Messeinheit zum Aufzeichnen und Verknüpfen jeder digitalen Datei mit den Fahrbedingungen (da, dv) einschließlich mindestens eines Lenkwinkels und/oder einer Lenkwinkeländerung (da) und/oder einer Fahrzeuggeschwindigkeit und/oder einer Fahrzeugbeschleunigung (dv), die zu dem Zeitpunkt gemessen werden, wenn die digitale Datei erfasst wird,
- eine Vorhersageeinheit, die ein Maschinelles Lernen, wie ein tiefes neuronales Netzwerk, beherbergt,
wobei die Pfaderfassungseinheit (200, 210), angeordnet ist zum Zuführen zum Maschinellen Lernen, der digitalen Dateien mit den fakultativ erfassten und verknüpften Fahrbedingungen (da, dv), und
wobei das Maschinelle Lernen, wie ein tiefes neuronales Netzwerk, angeordnet ist zum Vorhersagen von mindestens einem zukünftigen Lenkwinkel und/oder einer zukünftigen Lenkwinkeländerung (da) und/oder einer zukünftigen Fahrzeuggeschwindigkeit und/oder einer zukünftigen Fahrzeugbeschleunigung (dv) anhand einer mindestens zu einem gegenwärtige oder vorhergehenden Zeitpunkt erfassten digitalen Datei, und wobei das Fahrzeug (100) eine Anzeigeeinheit aufweist, die angeordnet ist zum Anzeigen des vorhergesagten zukünftigen Lenkwinkels und/oder der zukünftigen Lenkwinkeländerung (da) und/oder der zukünftigen Fahrzeuggeschwindigkeit und/oder der zukünftigen Fahrzeugbeschleunigung (dv), oder wobei das Fahrzeug (100) eine autonome Antriebseinheit aufweist, die angeordnet ist zum Steuern der Lenkeinheit (400) und/oder der Antriebseinheit und/oder der Bremseinheit mit dem vorhergesagten zukünftigen Lenkwinkel und/oder der zukünftigen Lenkwinkeländerung (da) und/oder der zukünftigen Fahrzeuggeschwindigkeit und/oder der zukünftigen Fahrzeugbeschleunigung (dv),
wobei die Pfaderfassungseinheit (200, 210), angeordnet ist zum Aufnehmen einer Serie von Bildern,
**dadurch gekennzeichnet, dass** die Pfaderfassungseinheit (200, 210) angeordnet ist zum:
- Umwandeln jedes Bildes in ein monochromes Bild,
(i) Kopieren eines zu einem Zeitpunkt T(i-2) aufgenommenen monochromen Bildes und dessen verknüpften Fahrbedingungen (da, dv) in einen ersten Farbkanal eines Farbbildes,
(ii) Kopieren eines monochromen Bildes, das zu einem späteren Zeitpunkt T(i-1) aufgenommen worden ist, und dessen verknüpften Fahrbedingungen (da, dv) in einen zweiten Farbkanal eines Farbbildes,
(iii) Kopieren eines monochromen Bildes, das zu einem noch späteren Zeitpunkt T(i) aufgenommen worden ist, und dessen verknüpften Fahrbedingungen (da, dv) in einen dritten Farbkanal eines Farbbildes,
- Durchführen der Schritte (i) bis (iii), bis alle monochromen Bilder der Reise in eine Serie von Farbbildern kopiert sind.

## Revendications

1. Procédé pour assister un conducteur à conduire un véhicule (100) ou pour conduire un véhicule (100), le procédé comprenant une phase d'apprentissage et une phase de conduite,
la phase d'apprentissage comprenant les étapes de :
- capture et conversion de parties d'une trajectoire suivie vue au moins du point de vue d'un conducteur en une série de fichiers numériques, pendant au moins un voyage où un véhicule (100) est conduit par un conducteur humain,
- enregistrement pendant ledit au moins un voyage de conditions de conduite (da, dv) incluant au moins un angle de braquage et/ou une variation d'angle de braquage (da) et/ou une vitesse de véhicule et/ou une accélération de véhicule (dv),
- pour chaque fichier numérique pris dans la série de fichiers numériques, liaison vers ledit fichier numérique des conditions de conduite (da, dv) enregistrées à l'instant où ledit fichier numérique a été capturé,
- fourniture à un apprentissage machine, tel un réseau neuronal profond dudit fichier numérique et des conditions de conduite (da, dv) liées, pour associer :
- un fichier numérique et/ou des conditions de conduite (da, dv) à un instant donné Ti et /ou à un instant antérieur,
avec
- des conditions de conduite (da, dv) à un instant ultérieur audit instant donné Ti,
la phase de conduite comprenant les étapes de :
- capture et conversion de parties d'une trajectoire suivie vue au moins du point de vue d'un conducteur en une série de fichiers numériques pendant qu'un véhicule (100) est conduit,
- enregistrement éventuel et liaison vers chaque fichier numérique de conditions de conduite (da, dv) incluant au moins un angle de braquage et/ou une variation d'angle de braquage (da) et/ou une vitesse de véhicule et/ou une accélération de véhicule (dv) à l'instant où ledit fichier numérique est capturé,
- fourniture audit apprentissage machine, tel un réseau neuronal profond auxdits fichiers numériques des conditions de conduite (da, dv) éventuellement enregistrées et liées pour prévoir au moins un futur angle de braquage et/ou une future variation d'angle de braquage (da) et/ou une future vitesse de véhicule et/ou une future accélération de véhicule (dv),
- affichage à l'attention d'un conducteur desdits futur angle de braquage prévu et/ou future variation d'angle de braquage (da) prévue et/ou future vitesse de véhicule prévue et/ou future accélération de véhicule (dv) prévue, et/ou
- commande dudit véhicule (100) conduit avec lesdits futur angle de braquage prévu et/ou future variation d'angle de braquage (da) prévue et/ou future vitesse de véhicule prévue et/ou future accélération de véhicule (dv) prévue,
dans lequel, pendant la phase d'apprentissage et/ou pendant la phase de conduite, l'étape de conversion de parties d'une trajectoire suivie vue au moins du point de vue d'un conducteur en une série de fichiers numériques est une étape consistant à prendre une série de photographies,
**caractérisé en ce que** l'étape de fourniture au réseau neuronal profond desdites photographies et des conditions de conduite (da, dv) liées de la phase d'apprentissage et/ou de la phase de conduite comprend les étapes initiales de :
- conversion de chaque photographie en une image monochrome,
i) copiage d'une image monochrome prise à un instant T(i-2) et de ses conditions de conduite (da, dv) liées en un premier canal de couleur d'une image de couleur,
ii) copiage d'une image monochrome prise à un instant ultérieur T(i-1) et de ses conditions de conduite (da, dv) liées en un deuxième canal de couleur d'une image de couleur,
iii) copiage d'une image monochrome prise à un instant encore ultérieur T(i) et de ses conditions de conduite (da, dv) liées en un troisième canal de couleur d'une image de couleur,
- réalisation des étapes (i) à (iii) jusqu'à ce que toutes les photographies monochromes du voyage aient été copiées en une série d'images de couleur.

2. Procédé selon la revendication précédente, dans lequel l'étape de prise d'une série de photographies de la phase d'apprentissage et/ou de la phase de conduite comprend une étape de :
- prise d'une séquence vidéo d'une trajectoire suivie à l'aide d'une caméra à champ de vision d'au minimum 120° avec un taux minimal de 20 images par seconde,
- extraction de la série de photographies depuis la séquence vidéo prise.

3. Procédé selon l'une quelconque des revendications précédentes, dans lequel l'étape d'enregistrement des conditions de conduite (da, dv) de la phase d'apprentissage et/ou de la phase de conduite comprend une étape de :
- affectation de toute valeur d'un angle de braquage enregistré et/ou d'une variation d'angle de braquage (da) enregistrée à une classe choisie parmi au moins 10 classes et de préférence à une classe choisie parmi au moins 20 classes.
et/ou,
- affectation de toute valeur d'une vitesse de véhicule enregistrée et/ou d'une accélération de véhicule (dv) enregistrée à une classe choisie parmi au moins 10 classes et de préférence à une classe choisie parmi au moins 20 classes.

4. Procédé selon l'une quelconque des revendications 1 à 3, dans lequel l'étape de prise d'une série de photographies de la phase d'apprentissage comprend une étape finale de :
- extraction de manière aléatoire d'au moins deux images de chaque photographie prise, pour multiplier le nombre d'images à un instant donné.

5. Procédé selon la revendication précédente, dans lequel au moins 32 images sont extraites de manière aléatoire.

6. Procédé selon l'une quelconque des revendications précédentes, dans lequel un instant T(i-2) est un instant Ti moins une seconde et/ou un instant T(i-1) est un instant Ti moins une demi-seconde.

7. Procédé selon l'une quelconque des revendications précédentes, dans lequel, si pendant la phase d'apprentissage, plusieurs voyages de la même trajectoire sont effectués par des conducteurs humains,
- l'étape d'enregistrement de conditions de conduite (da, dv) inclut une étape d'enregistrement de position de véhicule,
- l'étape de liaison vers chaque fichier numérique des conditions de conduite (da, dv) enregistrées à l'instant où ledit fichier numérique a été capturé inclut une étape de liaison de chaque fichier numérique avec la position de véhicule lorsque ladite photographie a été prise.

8. Procédé selon l'une quelconque des revendications précédentes, dans lequel pendant la phase de conduite et pour prévoir au moins un futur angle de braquage et/ou une variation d'angle de braquage (da) et/ou une future vitesse de véhicule et/ou une accélération de véhicule (dv), ledit réseau neuronal profond prend en considération :
- le fichier numérique avec les conditions de conduite (da, dv) liées d'un instant Ti présent, et
- le fichier numérique avec les conditions de conduite (da, dv) liées d'un instant Ti moins une demi-seconde, et
- le fichier numérique avec les conditions de conduite (da, dv) liées d'un instant Ti moins une seconde.

9. Procédé selon l'une quelconque des revendications précédentes, dans lequel pendant la phase de conduite, ledit réseau neuronal profond prévoit au moins un futur angle de braquage et/ou une variation d'angle de braquage (da) et/ou une future vitesse de véhicule et/ou une accélération de véhicule (dv) à un instant Ti plus une seconde.

10. Procédé selon l'une quelconque des revendications 1 à 8, dans lequel pendant la phase de conduite, le procédé comprend une étape de :
- calcul d'un instant où un futur changement de condition de conduite sera nécessaire, à partir desdits fichiers numériques fournis à un instant donné,
- ajustement d'une valeur d'un instant le plus tard de prévision dudit au moins un futur angle de braquage et/ou d'une future variation d'angle de braquage (da) et/ou d'une future vitesse de véhicule et/ou d'une future accélération de véhicule (dv), en considération de l'instant calculé où un changement de conditions de conduite sera nécessaire.

11. Procédé selon la revendication précédente, dans lequel l'étape de calcul d'un instant où un futur changement de condition de conduite sera nécessaire comprend l'étape de prise en considération de données de géolocalisation et/ou de prise en considération de données de trajectoire de véhicule.

12. Véhicule (100) comprenant :
- une unité de braquage (400) agencée pour braquer le véhicule (100) lorsqu'un angle de braquage est appliqué à l'unité de braquage (400),
- une unité de puissance, agencée pour maintenir ou augmenter une vitesse de véhicule,
- une unité de freinage agencée pour arrêter le véhicule (100) ou pour diminuer la vitesse de véhicule
- une unité de capture de trajectoire (200, 210) agencée pour capturer et convertir des parties d'une trajectoire suivie vue au moins du point de vue d'un conducteur en une série de fichiers numériques, lorsque le véhicule (100) est conduit,
- une unité de mesure éventuelle, agencée pour enregistrer et lier à chaque fichier numérique des conditions de conduite (da, dv) incluant au moins un angle de braquage et/ou une variation d'angle de braquage (da) et/ou une vitesse de véhicule et/ou une accélération de véhicule (dv) mesurés à l'instant où ledit fichier numérique est capturé,
- une unité de prévision, hébergeant un apprentissage machine tel un réseau neuronal profond,
dans lequel l'unité de capture de trajectoire (200, 210) est agencée pour fournir audit apprentissage machine, tel un réseau neuronal profond, lesdits fichiers numériques avec les conditions de conduite (da, dv) éventuellement enregistrées et liées, et
dans lequel ledit apprentissage machine, tel un réseau neuronal profond, est agencé pour prévoir au moins un futur angle de braquage et/ou une future variation d'angle de braquage (da) et/ou une future vitesse de véhicule et/ou une future accélération de véhicule (dv) sur la base d'un fichier numérique capturé au moins à un instant présent ou antérieur, et
dans lequel le véhicule (100) comprend une unité d'affichage agencée pour afficher les futur angle de braquage et/ou future variation d'angle de braquage (da) et/ou future vitesse de véhicule et/ou future accélération de véhicule (dv) prévus, ou
dans lequel le véhicule (100) comprend une unité de conduite autonome, agencée pour commander l'unité de braquage (400) et/ou l'unité de puissance et/ou l'unité de freinage avec les futur angle de braquage et/ou future variation d'angle de braquage (da) et/ou future vitesse de véhicule et/ou future accélération de véhicule (dv) prévus,
dans lequel, l'unité de capture de trajectoire (200, 210) est agencée pour prendre une série de photographies,
**caractérisé en ce que** l'unité de capture de trajectoire (200, 210) est agencée pour :
- convertir chaque photographie en une image monochrome,
i) copier une image monochrome prise à un instant T(i-2) et ses conditions de conduite (da, dv) liées en un premier canal de couleur d'une image de couleur,
ii) copier une image monochrome prise à un instant ultérieur T(i-1) et ses conditions de conduite (da, dv) liées en un deuxième canal de couleur d'une image de couleur,
iii) copier une image monochrome prise à un instant encore ultérieur T(i) et ses conditions de conduite (da, dv) liées en un troisième canal de couleur d'une image de couleur,
- réaliser les étapes (i) à (iii) jusqu'à ce que toutes les photographies monochromes du voyage aient été copiées en une série d'images de couleur.
